# EUROPEAN PATENT APPLICATION

(11) **EP 1 942 386 A1**
(43) Date of publication of application: **09.07.2008**
(21) Application number: 07122975.1
(22) Date of filing: 12.12.2007
(51) Int. Cl.: G05B 19/05

(54) **Simulation data creation supporting device**

(30) Priority: 27.12.2006 JP 2006352809
(71) Applicant: FANUC LTD, Minamitsuru-gun, Yamanashi 401-0597 (JP)
(72) Inventor: Onishi, Yasushi c/o FANUC LTD, Minamitsuru-gun, Yamanashi 401-0597 (JP); HASEGAWA, Satoshi c/o FANUC LTD, Minamitsuru-gun, Yamanashi 401-0597 (JP); Maruyama, Toyokazu c/o FANUC LTD, Minamitsuru-gun, Yamanashi 401-0597 (JP)
(74) Representative: Billington, Lawrence Emlyn

(57) **Abstract**

A simulation data creation supporting device which facilitates creation of an input/output operation window when a sequence control program is simulated through operation using the input/output operation window. The simulation data creation supporting device reads out the configuration set-up information of an input/output unit that is stored in a controller. Input/output signal information (input/output address) is extracted from the configuration set-up information and added with a symbol and a comment of a preset input/output address. The input/output signal operative window configuration information is thus created. An input/output simulation device performs simulation in which an input/output signal operative window is displayed according to the input/output signal operative window configuration information; an input signal is simulatively inputted through the window; and a control program is executed in the controller to obtain and display an output signal in the window, to provide utility in debugging of the control program.

## Description

### BACKGROUND OF THE INVENTION

### 1. Field of the Invention

The present invention relates to a device for supporting creation of configuration information of an input/output signal operative window for performing simulation so as to debug a sequence program to be executed by a controller such as a programmable controller and a numerical controller.

### 2. Description of Related Art

When a sequence control program is created and implemented by a controller, such as a programmable controller and a numerical controller, it is required to debug whether an input/output unit (input/output device) that is connected to the controller to be controlled by the sequence control program can be properly operated. The debugging is eventually carried out in the controller that implements the sequence control program. In a well known simulation method, by using an input/output signal operative window instead of the input/output unit, an input signal is preliminarily and simulatively generated in the input/output signal operative window. The input signal is inputted into a controller, and an output signal from the controller is displayed in the input/output signal operative window.

For instance, Unexamined Japanese Patent Publication No. 7-314284 describes a method for verifying a ladder program and circuit by registering an I/O device number for input(X040) and that for output (Y050) with respect to buttons of an operating portion and creating pseudo data of an input/output device using an operation specification file in which operation specifications of the input/output device are registered.

When the debugging of the sequence control program is carried out by using the input/output signal operative window, it has conventionally been required to assign input/output signals to input buttons, output lamps, and the like of the input/output signal operative window as described above. It takes a lot of work and time and is then bothersome to manually set the input/output signals to the buttons and lamps of the input/output signal operative window.

### SUMMARY OF THE INVENTION

The present invention provides a simulation data creation supporting device that facilitates creation of an input/output signal operative window for debugging a sequence control program using simulative signals.

A simulation data creation supporting device of the present invention supports creation of an input/output signal operative window configuration information for simulating execution of a sequence control program to be executed by a controller that performs a sequence control of input/output units connected thereto using a signal memory provided in the controller. The simulation data creation supporting device comprises: reading means that reads preset configuration set-up information on the input/output units stored in the controller; storage means that stores preset explanatory information on input/output signals for objective input/output signal addresses in the signal memory; and adding means that adds input/output signal explanatory information concerning input/output signal addresses extracted from the read configuration set-up information to the extracted input/output signal addresses, referring to the input/output signal explanatory information stored in the storage means, to thereby create the input/output signal operative window configuration information.

The adding means may create extracted information by extracting input/output signal addresses for each of the input/output units from the configuration set-up information, and create the configuration information of the input/output signal operative window using the extracted information. The input/output signal explanatory information may include symbol names and/or comments of the objective input/output signal address.

According to the present invention, it is possible to automatically create and set the information for simulation, which is to be set in the input/output signal operative window in which the input/output signal subjected to debugging is generated and displayed, according to the configuration set-up information of the input/output unit, and this makes it possible to efficiently perform debugging work.

### BRIEF DESCRIPTION OF THE DRAWINGS

FIG. 1 shows a configuration of a substantial part of the whole of one embodiment according to the present invention, and is a block diagram showing substantial parts of a simulation data creation supporting device, a controller, and an input/output unit simulation device;
FIG. 2 is a block diagram for explaining the creation of input/output signal operative window configuration information according to the embodiment;
FIG. 3 shows one example displayed in a window for setting the configuration set-up information of an input/output unit according to the embodiment;
FIG. 4 is an explanatory table of extracted information according to the embodiment;
FIG. 5 is an explanatory table of input/output signal explanatory information according to the embodiment;
FIG. 6 is an explanatory view of the input/output signal operative window configuration information according to the embodiment;
FIGS. 7a and 7b are explanatory views of the input/output signal operative window according to the embodiment;
FIG. 8 is a flowchart showing an algorithm of creation processing of the input/output signal operative window configuration information according to the embodiment; and
FIG. 9 is a flowchart showing an algorithm of processing of simulating and debugging a control program according to the embodiment.

### DETAILED DESCRIPTION

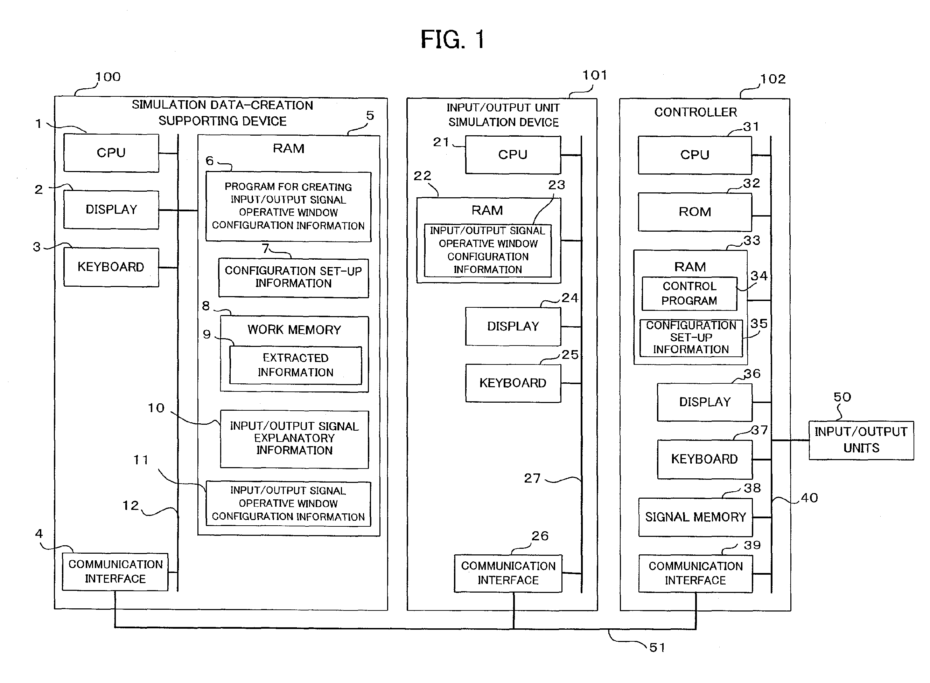

FIG. 1 is a block diagram showing substantial parts of a simulation data creation supporting device 100, a controller 102, such as a numerical controller and a programmable controller, which implements sequence control, and an input/output unit simulation device 101 that simulates control of an input/output unit which is executed according to a control program in the present embodiment.

The simulation data creation supporting device 100, the controller 102, and the input/output unit simulation device 101 are connected to one another through a communication path 51.

The simulation data creation supporting device 100 has a processor 1, a display 2, a keyboard 3, a communication interface 4, a RAM 5, and the like, which are connected to one another through a bus 12. The RAM 5 stores a program for creating input/output signal operative window configuration information 6 for creating an input/output signal operative window in which an input/output signal of an input/output unit is simulatively generated, and simulation is performed. The RAM 5 also reads out and stores configuration set-up information 35 of input/output units 50, which is stored in the controller 102 (referred to as "configuration set-up information 7" in FIG. 1). The RAM 5 further stores input/output signal explanatory information 10 for explaining an input/output signal consisting of a symbol and comment of the input/output signal. Input/output signal operative window configuration information 11 is created and stored by the program for creating input/output signal operative window configuration information 6 according to the input/output signal explanatory information 10 and the configuration set-up information 7. A work memory 8 installed in the RAM 5 is used to temporarily store data during the creation of the input/output signal operative window configuration information 11 and to do other work. The work memory 8 stores extracted information 9 consisting of input/output signal information that is extracted from the configuration set-up information 7.

In the controller 102, a processor 31, a ROM 32 for storing a system program, a RAM 33, a display 36, a keyboard 37, a signal memory 38 for storing the input/output signal and the like, and a communication interface 39 are connected to one another through a bus 40. The input/output units 50 are also connected to the bus 40 through an input/output interface, not shown.

In the RAM 33, a control program (sequence control program) 34, the configuration set-up information 35 of the input/output units 50 connected to the controller 102, and the like are set and stored in association with the present invention.

In the input/output unit simulation device 101, a processor 21, a RAM 22, a display 24, a keyboard 25, and a communication interface 26 are connected to a bus 27. The input/output signal operative window configuration information 11 that is created by the simulation data creation supporting device 100 is transferred to the RAM 22 and is stored as input/output signal operative window configuration information 23.

The simulation data creation supporting device 100, the controller 102, and the input/output unit simulation device 101 are connected to one another by a communication path 51 through communication interfaces 4, 39 and 26, to thereby send/receive information.

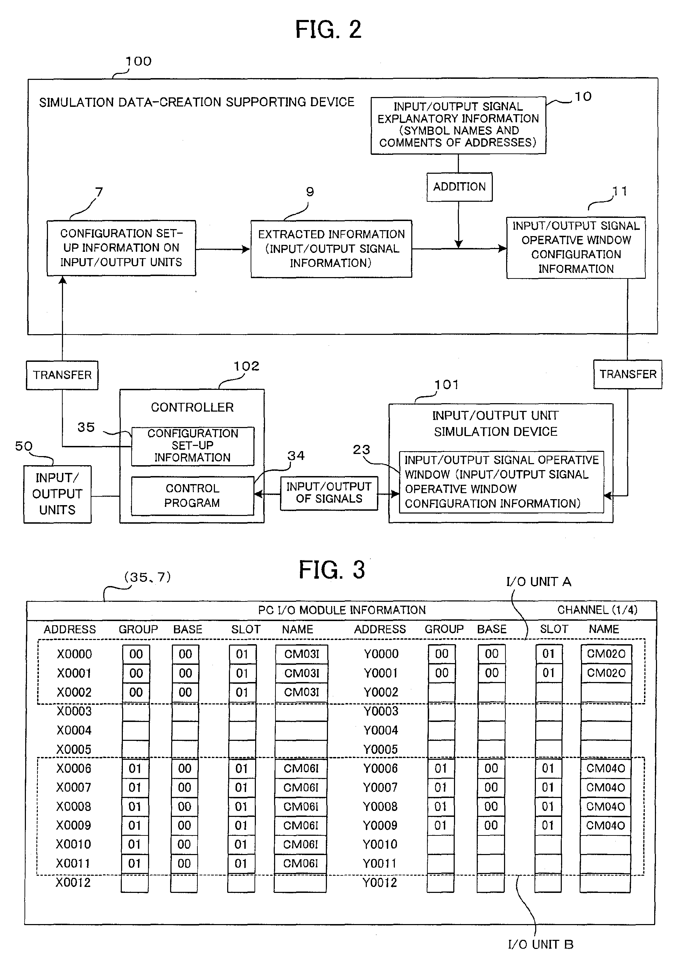

FIG. 2 is a block diagram showing a procedure of the creation of the input/output signal operative window configuration information.

As described above, the input/output units 50 are connected to the controller 102, and the configuration set-up information 35 of the input/output units 50 connected thereto is set and stored in the RAM 33 of the controller 102. At the same time, the RAM 33 stores the control program (sequence control program) 34 that carries out sequence control of the input/output units 50. The configuration set-up information 35 stored in the RAM 33 is transferred to the simulation data creation supporting device 100 and stored in the RAM 5 as the configuration set-up information 7 of the input/output unit. The processor 1 of the simulation data creation supporting device 100 receives the extracted information 9 obtained by extracting the input/output signal information with respect to each input/output unit from the configuration set-up information 7 of the input/output unit, and adds the input/output signal explanatory information 10 for explaining contents of the input/output signal including a symbol and a comment to the input/output signal information of the extracted information 9, to thereby create the input/output signal operative window configuration information 11. The input/output signal operative window configuration information 11 which is created in the simulation data creation supporting device 100 is transferred to the input/output unit simulation device 101 and stored in the RAM 22 as the input/output signal operative window configuration information 23.

The input/output unit simulation device 101, on the basis of the input/output signal operative window configuration information 23 stored therein, displays an input/output signal operative window for simulating the control program (sequence control program) 34 on the display 24. While the input/output signal operative window is operated, the control program (sequence control program) 34 is simulated, and debugging is carried out.

FIG. 3 shows one example of display of a window for setting the configuration set-up information of the input/output unit that is stored in the RAM 33 of the controller 102.

Addresses "X • • • • " and "Y • • • • " indicate addresses of signals stored in the signal memory 38. The address "X • • • • " represents an address in which an input signal to be inputted from the input/output units 50 to the controller 102 is stored (X represents the input signal). The address "Y • • • **•** " represents an address in which an output signal to be outputted from the controller 102 to the input/output units 50 is stored (Y represents the output signal).

With respect to the addresses, "GROUP," "BASE," and "SLOT" indicative of connecting positions in hardware are stored, and at the same, assigned names indicative of the number of input/output bytes are inputted and stored as the configuration set-up information 35.

The simulation data creation supporting device 100 reads out the configuration set-up information 35 stored in the RAM 33 of the controller 102, and stores the configuration set-up information 35 in the RAM 5 as the configuration set-up information 7.

The information indicative of the mechanical connecting positions included in the configuration set-up information 7, that is, "GROUP," "BASE" and "SLOT," are not necessary for the creation of the input/output signal operative window configuration information 11. For this reason, the above information is not extracted from the configuration set-up information 7. Instead, the input/output signal information, namely the input address "X • • • **•** " and the output address "Y • • • • ," are extracted with respect to each input/output unit name.

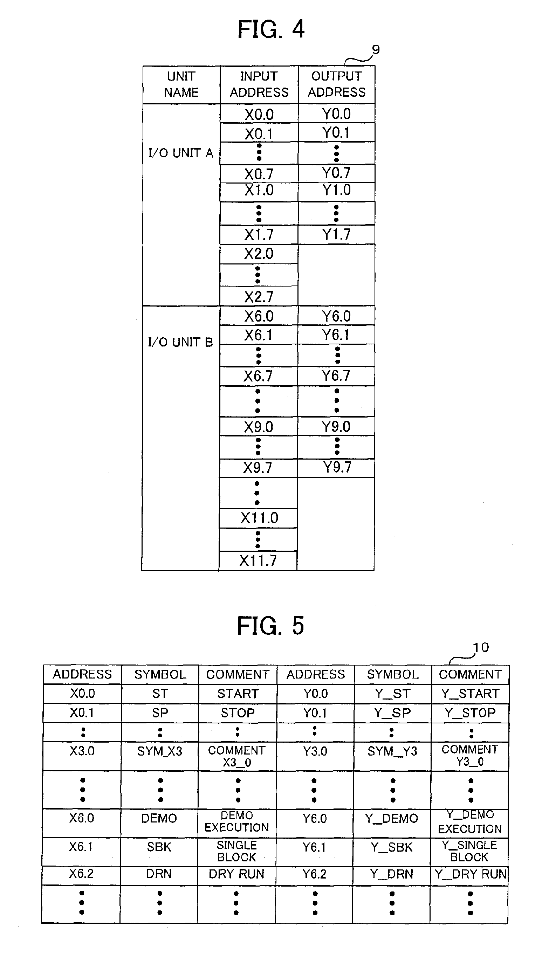

FIG. 4 is an explanatory table of the extracted information. The names of the input/output units 50 are determined by the assigned names stored as the configuration set-up information 7. Referring to the examples shown in FIGS. 3 and 4, a group of input addresses "X • • • • " with assigned name "CM03I" and output addresses "Y • • • • " with assigned name "CM02O" forms one input/output unit in the configuration set-up information shown in FIG. 3, and the above-mentioned input/output unit is called I/O unit A in FIG. 4. In the same manner, a group of addresses with assigned names "CM06I" and "CM04O" is extracted under a unit name, I/O unit B. The input address "X • • • • " and the output address "Y • • • • " of each of the input/output units are extracted and expanded into bit addresses.

FIG. 5 is an explanatory table of the input/output signal explanatory information 10 for explaining contents including symbols and comments of target input/output signals. The input/output signal explanatory information 10 is created according to the control program 34 of the sequence control program such as a ladder diagram, and is preliminarily set and registered in the simulation data creation supporting device 100.

With respect to each address of an input/output signal, a symbol and comment of the corresponding signal is stored. In the example shown in FIG. 5, with respect to the input address "X0.0," the symbol and the comment are set as "ST" and "START," respectively. In the same manner, with respect to the input address "X0.1," the symbol and the comment are set as "SP" and "STOP," respectively. With respect to the output address "Y0.0," the symbol and the comment are set as "Y_ST" and "Y_START," respectively. Likewise, the other input/output addresses are also provided with symbols and comments indicating the contents of signals of the respective addresses.

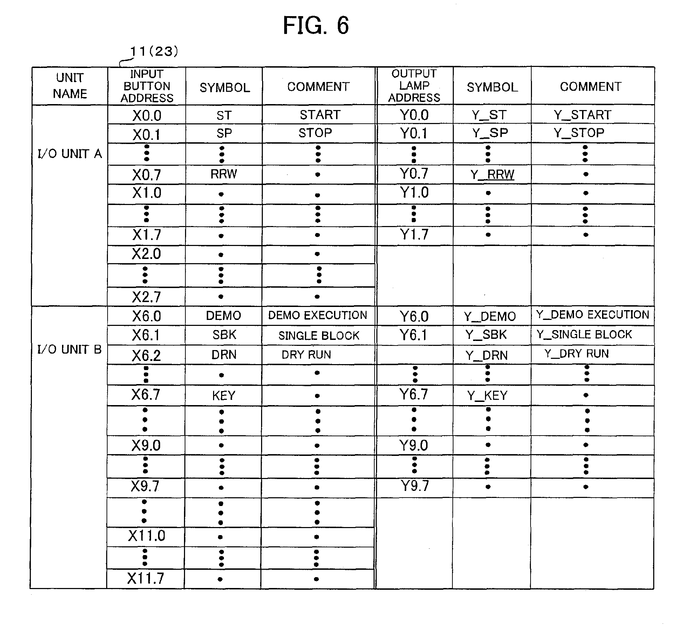

As shown in FIG. 4 that is extracted from the configuration set-up information 7 (35) of the input/output units of FIG. 3, the input and output addresses of the respective units of the extracted information 9 are added with the input/output signal explanatory information shown in FIG. 5. As a result, the input/output signal operative window configuration information 11 as shown in FIG. 6 is created. In other words, with respect to each input/output (I/O) unit, the symbol and the comment that are set in the input/output signal explanatory information 10 are assigned to the corresponding input address and output address. In this case, the input/output address that is set and registered in the input/output signal explanatory information 10 but not in the extracted information 9 is disregarded and not extracted. Only the input/output addresses of the extracted information are added with symbols and comments.

The input/output signal operative window configuration information 11 thus created is transferred to the input/output unit simulation device 101, and is stored in the RAM 22 as the input/output signal operative window configuration information 23.

Based upon the input/output signal operative window configuration information 23 thus stored, the input/output signal operative window for simulation is displayed on the display 24. By operating the input/output signal operative window, the simulation of the control program is performed, and the debugging is carried out.

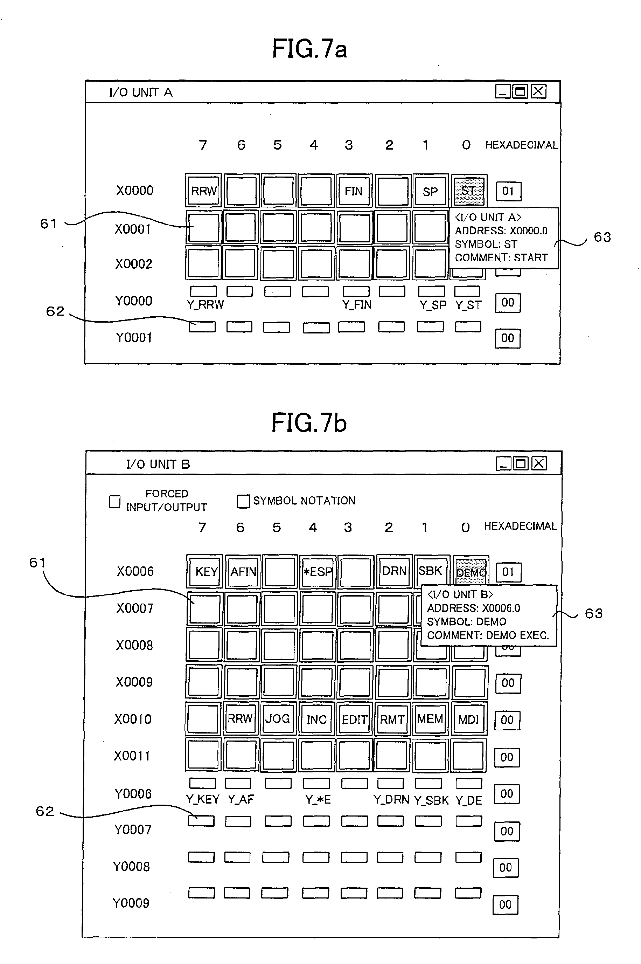

FIGS. 7a and 7b show examples of the input/output signal operative window for simulation, which are displayed on the display 24 of the input/output unit simulation device 101. FIG. 7a shows a screen on which the input/output signal operative window of the input/output (I/O) unit A is read out, whereas FIG. 7b is an example of the screen showing the input/output signal operative window with respect to the input/output (I/O) unit B.

Input buttons 61 are displayed correspondingly to the input addresses "X • • • • ," and output lamps 62 to the output addresses "Y • • • • ." In the display, numbers 0 to 7 arranged above the line of the input buttons 61 indicate numerical values after decimal points of numerical values of the input/output addresses.

In the input buttons 61 and the output lamps 62, the respective symbols are displayed according to the input/output signal operative window configuration information 23 shown in FIG. 6. For example, in the input/output signal operative window of the input/output (I/O) unit A shown in FIG. 7a, since a symbol of the input/output signal operative window configuration information 23 which is stored for the input address "X0.0" is "ST," the symbol "ST" is displayed in the input button corresponding to the input address "X0.0" A symbol "SP" is similarly displayed in the input button 61 corresponding to the input address "X0.1" since the symbol "SP" is stored in the input/output signal operative window configuration information 23. As the input/output signal operative window configuration information 23, symbols "Y_ST" and "Y_SP" are set to the output addresses "Y0.0" and "Y0.1," respectively. Therefore, these symbols are displayed in the respective output lamps 62.

In the same manner, in the input/output signal operative window of the input/output (I/O) unit B shown in FIG. 7b, the symbols stored for the respective input/output addresses of the input/output (I/O) unit B stored in the input/output signal operative window configuration information 23 are displayed in the respective input buttons 61 and output lamps 62.

If a cursor or a pointer on the input/output signal operative window are placed on one of the input buttons 61 or output lamps 62 by using a pointing device, such as a cursor key provided to the keyboard 25 and a mouse, a tool tip 63 is displayed as shown in FIGS. 7a and 7b, in which the information (input/output unit name, address, symbol and comment) stored in the input/output signal operative window configuration information 23 corresponding to the selected input button 61 or output lamp 62 is displayed.

When the simulation of the control program (sequence control program) 34 is carried out, one of the input buttons 61 is selected and inputted with the cursor or pointing device, and the input signal (X address) of the selected input button 61 is transmitted to the controller 102 as in conventional art. The input signal is then processed by the control program in the controller 102, and an output signal (Y address) is transmitted to the input/output unit simulation device 101. As a result, the output lamp 62 corresponding to the above output signal is turned on. After the presence of the output signal is confirmed, the debugging of the control program 34 is carried out.

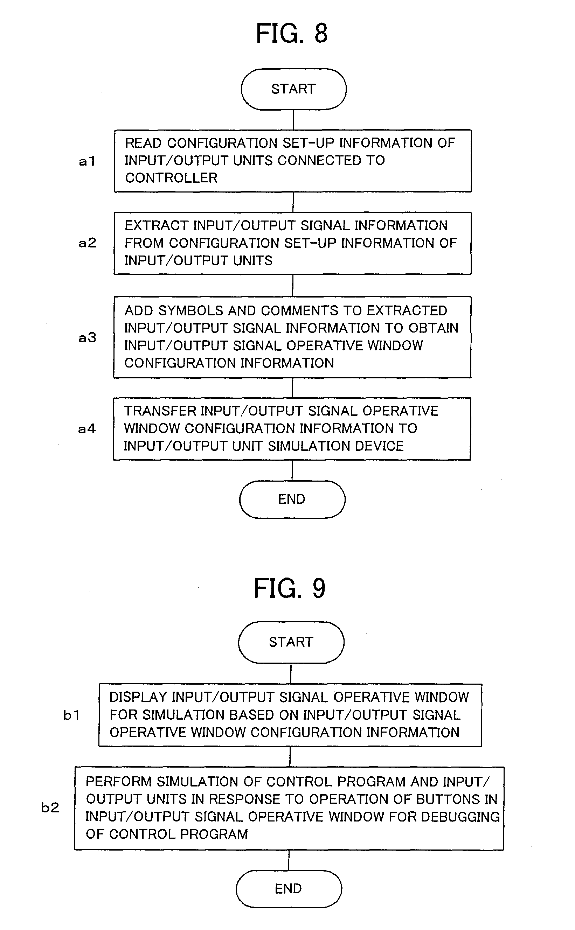

FIG. 8 is a flowchart showing an algorithm of creation processing of the input/output signal operative window configuration information for simulation, which is performed by the simulation data creation supporting device 100.

First, the configuration set-up information 35 of the input/output units, which is set and stored in the controller 102, is read and stored in the RAM 5 as the configuration set-up information 7 (Step a1). Secondly, as shown in FIG. 4, the input/output signal information (input address and output address) for each of the input/output unit names is extracted from the configuration set-up information 7 (Step a2).

The symbols and the comments of the input/output signal explanatory information 10 are added to the input/output signal information (input and output addresses) for each of the extracted input/output unit names, to thereby obtain the input/output signal operative window configuration information 11 for simulation (Step a3). The input/output signal operative window configuration information is transferred to the input/output unit simulation device 101 (Step a4), and the processing of the simulation data creation supporting device 100 is ended.

FIG. 9 is a flowchart showing an algorithm of processing of simulating and debugging the control program.

When an input/output unit name is selected and inputted, the processor 21 of the input/output unit simulation device 101 displays on the display 24 an input/output signal operative window for simulation for the selected input/output unit based on the input/output signal operative window configuration information, as shown in FIGS. 7a and 7b (Step b1). The input signal (signal of the X address) is transmitted to the controller 102 by operating the input button 61 of the input/output signal operative window. The controller 102 executes the control program and returns a processing result to the input/output unit simulation device 101 as an output signal (signal of the Y address), thereby turning on the output lamp 62 of the input/output signal operative window, which corresponds to the above output signal. This operation is repeatedly carried out. Depending upon whether or not the output lamp 62 related to the operation of the input button 61 is turned on, the control program 34 is simulated for use in debugging of the control program (Step b2).

Subsequently, the input/output units are sequentially selected by using the input/output signal operative window displayed on the display 24 of the input/output unit simulation device 101 and the keyboard 25, and the simulation and debugging of the control program are carried out.

According to the above-described embodiment, the input/output signal operative window configuration information 11 shown in FIG. 6 is obtained from the extracted information 9 of FIG. 4 which is obtained by extracting the input/output addresses and the like from the configuration set-up information 7 of the input/output units shown in FIG. 3 and the input/output signal explanatory information 10 of FIG. 5. However, it is also possible to create the input/output signal operative window configuration information 11 directly from the input/output signal explanatory information 10 while extracting the input/output addresses and the like from the configuration set-up information 7 of the input/output units without creating the extracted information 9 as shown in FIG. 4.

## Claims

1. A simulation data creation supporting device for supporting creation of an input/output signal operative window configuration information for simulating execution of a sequence control program to be executed by a controller that performs a sequence control of input/output units connected thereto using a signal memory provided in the controller, said simulation data creation supporting device comprising:
reading means that reads preset configuration set-up information on the input/output units stored in said controller;
storage means that stores preset explanatory information on input/output signals for objective input/output signal addresses in the signal memory; and
adding means that adds input/output signal explanatory information concerning input/output signal addresses extracted from the read configuration set-up information to the extracted input/output signal addresses, referring to the input/output signal explanatory information stored in said storage means, to thereby create the input/output signal operative window configuration information.

2. A simulation data creation supporting device according to claim 1, wherein said adding means creates extracted information by extracting input/output signal addresses for each of the input/output units from the configuration set-up information, and creates the configuration information of the input/output signal operative window using the extracted information.

3. A simulation data creation supporting device according to claim 1, wherein the input/output signal explanatory information includes symbol names and/or comments of the objective input/output signal address.
